Europäisches Patentamt

European Patent Office

Office européen des brevets

(19)

(11) Numéro de publication: **0 170 552**
**B1**

(12) ## FASCICULE DE BREVET EUROPÉEN

(45) Date de publication du fascicule du brevet:
23.08.89

(51) Int. Cl.⁴: **G 01 F 1/38,** G 01 F 5/00, G 01 F 15/10

(21) Numéro de dépôt: 85401218.4

(22) Date de dépôt: 19.06.85

(54) Débitmètre à perte de charge et appareil de réglage de débit comportant un tel débitmètre.

(30) Priorité: 22.06.84 FR 8409811

(43) Date de publication de la demande:
05.02.86 Bulletin 86/6

(45) Mention de la délivrance du brevet:
23.08.89 Bulletin 89/34

(84) Etats contractants désignés:
AT BE CH DE FR GB IT LI LU NL SE

(56) Documents cité:
DE-A-1 811 065
DE-A-2 405 786
DE-A-2 414 225
FR-A-1 487 434
FR-A-2 223 671
FR-A-2 290 656
GB-A-25 320
US-A-331 248
US-A-3 424 001
US-A-3 603 148

PATENTS ABSTRACTS OF JAPAN, vol. 6, no. 141 (P-131) 1019 , 30 juillet 1982, page 6 P 131; & JP - A - 57 6 915 (EMU ANDO EMU TEKUNOROJII K.K.) 14-04-1982

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Molozay, Maurice, 1, allée des Charpentiers, F-78320 Le Mesnil Saint- Denis (FR)**
Inventeur: **Arnault, Jean, Cidex 639, F-38330 Saint Nazaire Les Eymes (FR)**
Inventeur: **Vermeille, Hugues, 14, rue Champ Rochas, F-38240 Meylan (FR)**
Inventeur: **Danel, François, 21, avenue Jeanne d'Arc, F-38000 Grenoble (FR)**

(74) Mandataire: **Sadones Laurent, Renée, L'AIR LIQUIDE 75, quai d'Orsay, F-75321 Paris Cédex 07 (FR)**

1

EP 0 170 552 B1

## Description

L'invention concerne un débitmètre à perte de charge destiné à être utilisé soit en appareil de mesure, soit dans un circuit de régulation du débit d'un fluide gazeux ou liquide.

En particulier, la présente invention vise un débitmètre à perte de charge comportant au moins un trajet de mesure pour une fraction au moins du fluide dont on mesure le débit avec des zones de mesure ménagées sur ce trajet, l'une étant dite amont et l'autre aval, le trajet comportant, sur une partie au moins de son étendue, un conduit de mesure, le débitmètre comportant des moyens adaptés à mesurer la différence de pression entre les zones amont et aval, ainsi qu'une prise de pression ménagée sur le trajet de mesure.

Des débitmètres à perte de charge sont déjà utilisés dans les diverses industries concernées. Dans une première catégorie de ces types d'appareils, le fluide dont on doit mesurer le débit passe au travers d'une enceinte à l'intérieur de laquelle on dispose un organe déprimogène qui se présente le plus souvent sous la forme d'un diaphragme ou d'un venturi créant une perte de charge. Le débit du fluide est déterminé par calcul après la mesure de la pression en amont et en aval de l'organe déprimogène ou plus souvent, par la mesure de la pression, soit en amont, soit en aval, dudit organe et la mesure directe de la différence de pression occasionnée par cet organe. On sait que le débit du fluide est alors proportionnel à la racine carrée de la différence de pression, le débit étant alors déterminé de manière absolue, en faisant intervenir le résultat de la mesure de pression, soit en amont, soit en aval.

Ce genre de débitmètre présente, par sa nature même, trois types d'inconvénients.

Tout d'abord, il convient de noter que l'on doit effectuer des mesures de pression, ce qui entraîne l'emploi de des capteurs de pression indépendants. Si l'on veut faire une mesure assez précise, il faut utiliser un capteur différentiel, particulièrement coûtex jusqu'à un passé récent, ou un capteur à l'amont et un capteur à l'aval de grande précision - de l'ordre du 1/1000e -, donc coûteux.

On observera aussi que la gamme de mesures du débitmètre appartenant à la première catégorie, n'est pas très étendue, cela découlant de l'utilisation des capteurs différentiels utilisés jusqu'à présent ayant eux-mêmes une gamme restreinte. Cet inconvénient est renforcé par le fait que, comme la loi débit-pression est quadratique, la dynamique de mesure du débit est de l'ordre de la racine carrée de celle du capteur de pression différentielle utilisé.

Un autre inconvénient est lié au fait que le traitement électronique des deux mesures de pression n'est pas simple: extraction d'une racine carrée, etc..

On trouve sur le marché une seconde catégorie de débitmètres, appelés rotamètres, à perte de charge et qui n'utilisent pas un capteur de pression différentielle. Le fluide dont on désire mesurer le débit est admis par le bas dans une enceinte dont la forme intérieure est celle d'un tronc de cône ayant la tête en bas. A l'intérieur de ce cône, on dispose un obstacle se présentant sous forme d'un bouchon-flotteur qui s'élève sous la vitesse du fluide, et la détermination du débit est fonction de la position du bouchon-flotteur et de la pression dans l'enceinte.

Un tel rotamètre présente lui aussi plusieurs inconvénients: Tout d'abord la mesure du déplacement vertical du bouchon n'est pas très aisée. De plus, le traitement électronique du résultat de cette mesure n'est pas simple puisqu'il ne s'agit pas d'une fonction linéaire. L'emploi d'un tel rotamètre est parfois rendu difficile puisqu'il faut le maintenir constamment en position verticale pour que l'équilibre poids du bouchon-pression, puisse s'établir. Il faut souligner aussi que le prix de revient de ces rotamètres est particulièrement élevé.

On notera aussi que les débitmètres appartenant aux deux catégories ci-dessus ne permettent en général pas leur adaptation de manière facile dans un circuit de régulation automatique d'un débit de fluide.

On connaît aussi un débitmètre, commercialisé par la Demanderesse sous la marque "ALPHAGAZ", présentant un conduit primaire dans lequel le débit à mesurer est admis et s'écoule en régime laminaire une faible fraction de ce débit y est prélevée et s'écoule, en régime laminaire dans un conduit secondaire de mesure.

Le conduit de mesure se présente sous forme d'un tube capillaire à écoulement laminaire comportant deux enroulements électriques dont la résistance varie avec la température. Ces enroulements sont séparés par une portion de tube et associés à une électronique appropriée, permettant la mesure du débit, par la mesure du transfert de calories dans ladite portion du conduit de mesure. Le conduit primaire se présente sous forme d'une fente annulaire permettant un écoulement laminaire du gaz entre les bornes du conduit de mesure, et, par conséquent, à l'intérieur de ce dernier.

Bien que donnant globalement satisfaction, l'appareil rappelé ci-dessus n'en présente pas moins, à l'usage, dans certaines circonstances, quelques inconvénients.

Tout d'abord, on observera que la mesure du débit par transfert de calories dans le conduit de mesure est assez lente. En effet, le temps de réponse pour obtenir 99 % de la valeur mesurée est de l'ordre de quelques secondes. Dans certaines applications, notamment s'agissant d'un régulateur de débit soumis à de brusques variations, ce temps de réponse s'avère trop long.

Dans certaines circonstances, cet appareil de mesure est sujet à des dérives dans le temps. En fait, il s'avère que, sous certaines conditions, la cellule thermique constituée par le tube capillaire et les éléments électriques est moins fiable que les capteurs de pression utilisés dans la première catégorie d'appareils de l'art antérieur rappelé plus haut. Ainsi par exemple, convient-il de protéger la cellule thermique des courants d'air: ces derniers affectent la fiabilité de la mesure et peuvent aller jusqu'à causer une erreur de l'ordre de 10 % si aucune protection n'est prévue.

La nature même de la cellule thermique utilisée fait que l'appareil est limité en température d'utilisation.

Enfin, les conditions de fonctionnement de la cellule thermique liées à sa structure (tube capillaire à écoulement laminaire de longueur forcément limitée) font que celle-ci ne peut mesurer que des débits de l'ordre de 10 cm$^3$/mn. Comme par ailleurs, les exigences en fiabilité font le rapport entre le débit admis et le débit mesuré, ne peut excéder une valeur limite (2.10$^4$ en pratique) la capacité de l'appareil de mesure de débit se trouve de ce fait limitée à 200 l/mn.

Cet ensemble d'inconvénients fait que l'appareil rappelé ci-dessus ne peut donner entière satisfaction dès lors que l'on veut mesurer de forts débits (plusieurs centaines de m$^3$/h) avec un temps de réponse suffisamment court et sans avoir à prendre de précautions d'emploi particulières.

Dans l'art antérieur, on peut également citer le brevet US N° 3 247 499 qui décrit un indicateur de débit par tout ou rien. Un noyau magnétique cylindrique est monté à coulissement entre deux positions dans un conduit dans lequel est admis le débit. Un bobinage est monté autour du conduit et alimenté en courant alternatif en sorte que le noyau magnétique est maintenu par le jeu des forces électromagnétiques dans une première position tant que le débit ne dépasse pas une valeur prédéterminée. Dès que le débit dépasse ladite valeur, le noyau est repoussé vers la seconde position.

Le dispositif décrit dans ce brevet US n'est, et ne peut être, qu'un indicateur de débit permettant de savoir si le débit admis dans le conduit dépasse ou non une valeur prédéterminée.

On a déjà proposé un procédé de mesure d'un débit de fluide gazeux mettant en oeuvre un cylindre placé dans un logement également cylindrique définissant entre eux un conduit annulaire de faible dimension radiale pour le dit fluide gazeux avec des moyens pour mesurer la différence de pression du fluide entre les extrémités amont et aval dudit conduit annulaire, et en déterminant les conditions d'écoulement du fluide gazeux dans ledit conduit annulaire pour assurer un régime laminaire. Un tel procédé est décrit dans le PATENT ABSTRACTS DE JAPAN, vol. 6, N° 141 (P. 131) (1019) 30 juillet 1982, page 6 P. 131; correspondant au brevet japonais JP-A-5 761 915 (EMU ANDO EMU TEKU NOROJII K.K.), 14 avril 1982. Dans ce procédé le cylindre interne est monté à déplacement axial élastique proportionnel à la différence de pression, et un signal électrique correspondant est généré.

On a également proposé dans le brevet FR-A-2 290 656 un dispositif pour la mesure de débit de masse d'un fluide gazeux dans une restriction d'écoulement laminaire en élaborant une mesure proportionnelle au produit de la pression différentielle $\Delta P$ et de la pression absolue $P_m$.

Les techniques connues à écoulement laminaires rappelées ci-dessus présentent cependant cet inconvénient d'être adaptées aux seuls débits faibles et, en outre, sont sensibles de par leur construction faisant intervenir un cylindre noyau mobile, à des variations brusques de débit.

La présente invention a pour objet de pallier tous les inconvénients mentionnés ci-dessus et vise un dispositif de mesure comme décrit dans la revendication 1.

Selon une forme de réalisation, l'élément cylindrique est équipé à ses extrémités de moyens d'admission et d'échappement d'un débit gazeux débouchant en regard de perforations radiales pour dériver un débit gazeux de mesure, tandis qu'un débit principal circule directement à l'intérieur dudit élément cylindrique creux.

Selon un forme de réalisation, les moyens de mesure de la pression différentielle sont du type à noyau magnétique et bobine, le noyau étant solidaire soit d'un fond d'une enceinte élastiquement déformable soumise extérieurement à la pression amont et intérieurement à la pression aval, soit au centre d'une membrane immobilisée à sa périphérie et soumise sur une face à la pression amont, sur l'autre face à la pression aval.

Ces dispositions sont particulièrement avantageuses. En effet, elles permettent déjà la réalisation des débitmètres susceptibles de mesurer des débits particulièrement importants, de l'ordre de plusieurs centaines de mètres cubes par heure. De plus, elles permettent la réalisation de débitmètres devant être soumis à de fortes et brusques variations de pression puisqu'on peut prévoir un nombre tout à fait restreint de pièces mobiles.

Ces dispositions permettent la réalisation d'un débitmètre particulièrement simple et fiable, notamment pour ce qui est de la structure des moyens adaptés à déterminer des différences de pression entre les zones amont et aval.

En effet, des moyens de butée disposés dans l'enceinte de mesure permettent de protéger celle-ci d'une déformation plastique en cas de surcharge avec, par exemple, un débit admis à l'intérieur du débimètre, momentanément supérieur au débit maximum théoriquement admissible.

Les caractéristiques et avantages de la présente invention ressortiront d'ailleurs de la description qui va suivre, en référence aux dessins annexés sur lesquels:

- les figures 1, 2 et 3 sont des vues en élévation représentant trois modes de réalisation de débitmètres selon l'invention;
- la figure 4 est une vue en coupe suivant la ligne XII - XII de la figure 3 du débitmètre représenté sur cette figure.

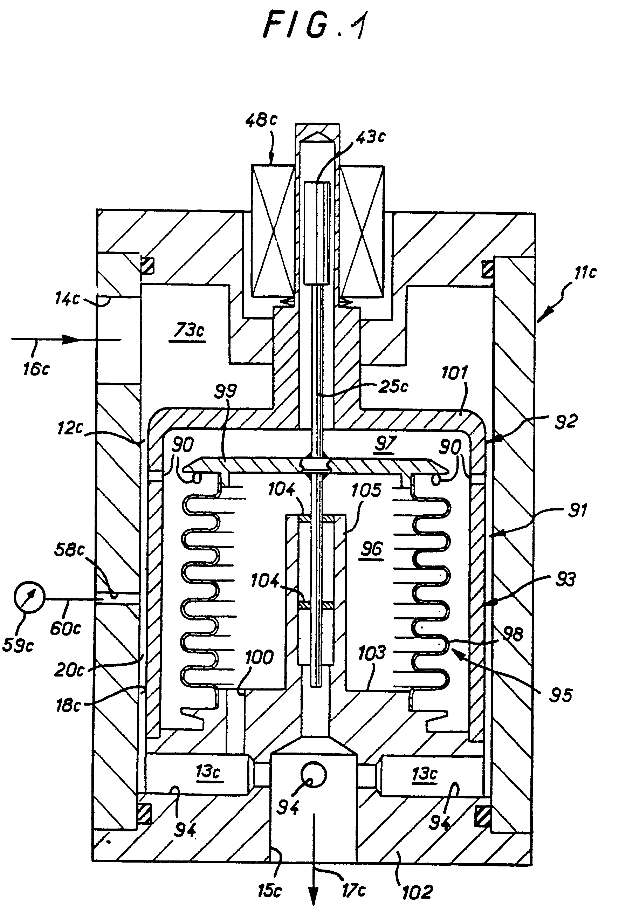

Selon la forme de réalisation choisie et représentée en figure 1, le débitmètre comporte essentiellement un corps cylindrique 11c comportant un orifice d'entrée 14c et un orifice de sortie 15c adaptés à recevoir des conduites d'entrée et de sortie représentées schématiquement par les flèches 16c et 17c.

Les orifices d'entrée et de sortie sont réunis par un conduit principal 18c de forme cylindrique.

Un obstacle cylindrique 93 est disposé à l'intérieur du conduit 18c et coaxialement à ce dernier, déterminant ainsi, dans l'espace radial ménagé entre l'obstacle cylindrique 93 et la paroi interne du conduit principal 18c un conduit de mesure 20c adapté à imposer un écoulement en régime laminaire au fluide le parcourant.

Selon un autre aspect de la présente invention, l'obstacle cylindrique 93 est surmonté, à son extrémité amont d'un anneau dit "de garde" 92. L'anneau de garde 92 est constitué d'une pièce cylindrique, ici de même diamètre que l'obstacle cylindrique 93 dont l'extrémité amont présente un arrondi annulaire 101. Dans la forme de réalisation représentée, l'anneau de garde 92 et l'obstacle cylindrique 93 sont constitués par une seule et même pièce 91 en forme de cloche présentant un volume intérieur 97 creux. La séparation entre l'anneau de garde 92 et l'obstacle cylindrique 93 est matérialisée par des perçages radiaux 90 uniformément répartis sur la périphérie de la pièce 91. Ces perçages 90 mettent en communication le volume interne 97 de la pièce 91 avec le conduit de mesure 20c.

La pièce 91 repose sur un socle 102 sur lequel repose également le conduit principal 18c. Le socle 102 comporte un perçage axial constituant l'orifice de sortie 15c et quatre perçages radiaux 94 disposés en aval de la pièce en forme de cloche 91 et mettant en communication le conduit de mesure 20c avec l'orifice de sortie 15c, ces perçages 94 constituant la zone de mesure aval 13c.

La partie supérieure 103 du socle 102 constitue un support pour une enceinte élastiquement extensible axialement 95 comportant un soufflet élastique 98 fixé à sa base sur la partie 103 du socle 102. A l'extrémité opposée, un plateau 99 clôt ainsi le volume 96 intérieur à l'enceinte élastiquement extensible axialement 95. Le soufflet 98 est ici réalisé en une matière élastique conformée en ondulations annulaires disposées de la base du soufflet jusqu'à son extrémité opposée portant le plateau 99 en sorte que le soufflet 98 présente ainsi une élasticité dans le sens axial. Le plateau 99 est solidaire d'une tige 25c portant un noyau plongeur 43c dans le corps d'une bobine 48c. A son extrémité opposée, à l'intérieur du soufflet 98 la tige 25c est guidée par deux anneaux de guidage 104 disposés dans une protubérance axiale creuse de la partie 103 du socle 102.

L'enceinte élastiquement extensible axialement 95 se trouve ainsi disposée à l'intérieur d'une enceinte rigide constituée ici par le volume intérieur 97 de la pièce en forme de cloche 91, le volume intérieur de cette pièce en forme de cloche étant en communication avec la zone amont de mesure 12c au moyen des perçages 90.

Suivant une autre caractéristique de ce mode de réalisation, la zone aval de mesure 13c est en communication avec le volume intérieur 96 de l'enceinte élastiquement rigide axialement 95, au moyen d'un perçage 100 mettant en communication l'un des perçages 94 avec ce volume intérieur 96. On notera enfin que l'ensemble tige 25c-noyau 43c-bobine 48c constitue ici aussi un moyen de mesure de l'extension axiale de l'enceinte élastiquement extensible axialement 95.

En fonctionnement, le fluide dont on mesure le débit est admis par l'orifice d'entrée 14c dans une chambre annulaire de réception 73c disposée au-dessus de l'anneau de garde 92.

D'une manière générale, le régime d'écoulement du fluide dans la canalisation en amont du débitmètre est turbulent. Le rôle de l'anneau de garde 92 est d'atténuer les turbulences en sorte qu'au niveau de la zone de mesure amont 12c le régime établi est déjà laminaire. L'obstacle créant la perte de charge mesurée, le corps cylindrique 93, s'étend entre les perçages 90, constituant la zone de mesure amont 12c, et les perçages 94 constituant la zone de mesure aval 13c. La pression au niveau des perçages 90 est admise par ces derniers à l'intérieur de l'enceinte élastiquement extensible axialement 95, tandis que la pression au niveau de la zone de mesure aval 13c est admise à l'intérieur de cette enceinte élastique 95. Le plateau 99 prend alors une position correspondant à la différence de pression existant entre l'intérieur et l'extérieur de l'enceinte élastiquement extensible axialement 95. Les moyens électromagnétiques constitués par le noyau plongeur 43c, solidaire du plateau 99 par l'intermédiaire de la tige 25c, et la bobine 48c permet de créer, un signal électrique représentatif de la position du plateau 99 et, par suite, de la différence de pression entre les zones amont 12c et aval 13c.

On notera que dans ce mode de réalisation, la prise de mesure de pression absolue 58c est disposée sur le conduit de mesure 20c à mi-chemin entre les zones de mesure amont 12c et aval 13c.

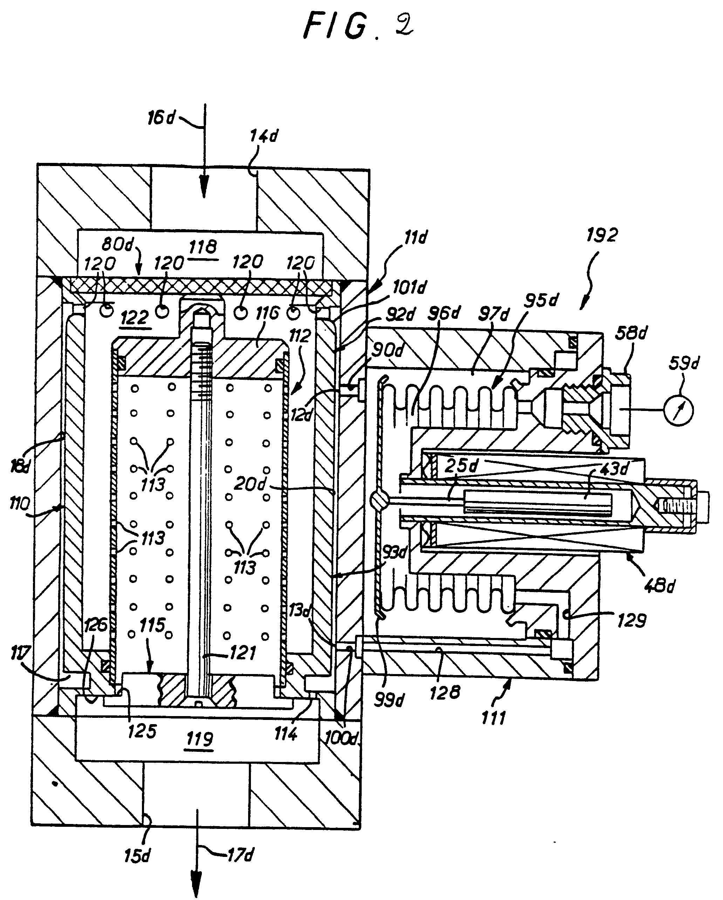

Sur la figure 2, le débitmètre comporte un conduit principal 18d, dans lequel est montée une pièce globalement cylindrique 110. Le diamètre interne du conduit cylindrique 18d et celui externe, de la majeure partie de la pièce 110 sont tels qu'un espace présentant une section sous forme d'une fente annulaire, formant conduit de mesure 20d est ménagé entre la pièce 110 et la paroi interne du conduit 18d.

Le débitmètre comporte un orifice d'entrée 14d et un orifice de sortie 15d. Ici l'orifice d'entrée 14d débouche dans une chambre de réception 118. La chambre 118 est de forme cylindrique et son extrémité aval est obturée par un filtre de tranquillisation 80d.

La pièce cylindrique 110 est creuse, son volume intérieur, de forme globalement cylindrique, étant référencé en 122. Le filtre de tranquillisation 80d obture le volume 122 à son extrémité amont. Au voisinage du filtre de tranquillisation la pièce cylindrique 110 comporte une série d'orifices ici aussi appelés, par commodité, orifices de répartition, référencés en 120. Ces orifices sont répartis régulièrement sur la périphérie de la pièce cylindrique 110 et mettent en communication le volume interne 122 de celle-ci avec le conduit de mesure 20d.

Le volume intérieur 122 de la pièce cylindrique 110 constitue, ici, un trajet de dérivation sur lequel un obstacle à forte perte, constitué par un cylindre ajouré 112, est disposé.

Le cylindre 112 est ajouré par une pluralité d'orifices 113. Son extrémité supérieure est obturée au moyen d'un socle circulaire 116 tandis que son extrémité inférieure est ouverte, une barrette de maintien étroite 115 y étant montée. L'ensemble cylindre ajouré 112-socle 116-barrette 115 est monté au moyen d'une vis de maintien 121, la barrette 115 présentant une échancrure 125 comportant une surface d'appui venant en butée sur une surface d'appui annulaire 126 de la pièce cylindrique 110, en sorte que l'obstacle à forte perte constitué par le cylindre ajouré 112 est maintenu en place, coaxialement au volume intérieur 122 de la pièce cylindrique 110.

Deux prises de pression, constituées par des perçages 90d et 100d mettent le conduit de mesure 20d en communication avec les moyens 192 de mesure de différence de pression ici extérieurs au corps 11d. Ici le perçage 90d correspond à la zone de mesure amont 12d tandis que le perçage 100d correspond à la zone de mesure aval 13d, la portion de cylindre 93d du corps cylindrique 110 comprise entre les zones amont et aval de mesure constituant le cylindre de mesure proprement dit, tandis que la zone 92d comprise entre les orifices de répartition 120 et la zone de mesure amont 12d constitue un anneau de garde comportant un arrondi annulaire 101d.

A l'aval de la zone de mesure aval 13d, le conduit de mesure 20d débouche dans une chambre concentrique 117 comportant un orifice 114, de même diamètre et profondeur que les orifices 113 du cylindre ajouré 112, mettant en communication la chambre concentrique 117 avec la chambre d'évacuation 119.

L'orifice 114 constitue ici un obstacle à forte perte de charge disposé en aval du conduit de mesure et créant une perte de charge quadratique égale à celle créée par chacun des orifices 113: le débit admis dans la chambre d'évacuation 119 par l'orifice 114 est proportionnel au débit admis dans cette chambre d'évacuation 119, à l'aval du cylindre ajouré 112, la constante de proportionnalité étant le nombre d'orifices 113 que comporte ce cylindre ajouré, cent dans l'exemple représenté à la figure 2.

L'orifice 90d débouche dans le volume intérieur 97d d'une enceinte rigide 111 des moyens 192 de mesure de différence de pression. L'orifice 100d débouche par l'intermédiaire de conduites 128 et 129 dans le volume intérieur 96 d'une enceinte élastiquement extensible axialement 95d semblable à celle décrite à l'appui de la figure 1 et disposée à l'intérieur de l'enceinte 111. L'enceinte 95d comporte un plateau 99d solidaire, par l'intermédiaire d'une tige 25d d'un noyau plongeur 43d dans une bobine 48d.

Dans ce mode de réalisation, la prise de mesure de pression absolue 58d débouche dans le volume intérieur 96d de l'enceinte élastiquement extensible axialement 95d, en sorte que la pression mesurée est celle présente au niveau de la zone de mesure aval 13d.

En fonctionnement, le débit de fluide est admis par l'orifice d'entrée 14d dans la chambre de réception 118. Il traverse tout d'abord le filtre de tranquillisation 80d en sorte que les turbulences présentes en amont débitmètre sont fortement atténuées. Le débit pénètre alors dans le volume intérieur 122 de la pièce cylindrique 110 et une fraction de ce débit (le 1/101è) est admise, par les orifices de répartition 120 dans le conduit de mesure 20d. La fraction de débit admise par les orifices de répartition 120 passe tout d'abord le long de l'anneau de garde 92d, les turbulences étant alors éliminées en sorte que le régime d'écoulement du fluide est déjà sensiblement laminaire en amont de la zone amont de mesure 12d. Le fluide s'écoule dans le conduit de mesure 20d et la perte de charge créée par l'obstacle cylindrique constitué par la portion 93d de la pièce cylindrique 110, disposée entre les zones de mesure amont 12d et de mesure aval 13d est mesurée au moyen du déplacement du plateau 99d de l'enceinte élastiquement extensible axialement 95d. La fraction de fluide admise dans le conduit de mesure 20d est évacuée dans la chambre d'évacuation par l'orifice 114.

La fraction de fluide dérivée (les 100/101è du débit admis par l'orifice d'entrée 14d) traverse les cent orifices 113 du cylindre ajouré 112 et est évacuée vers la chambre d'évacuation par les ouvertures présentes de part et d'autre de la barrette 115.

La structure décrite à l'appui de la figure 2 est avantageuse en ce que l'espace interne du corps 11d est utilisé de manière particulièrement rationnelle pour constituer un trajet de mesure et un trajet de dérivation. De plus, on observera que les orifices d'entrée et de sortie 14d, 15d sont disposés coaxialement au corps 11d, ce qui permet de placer ce débitmètre dans une conduite linéaire en évitant d'avoir à imposer un coude à cette dernière.

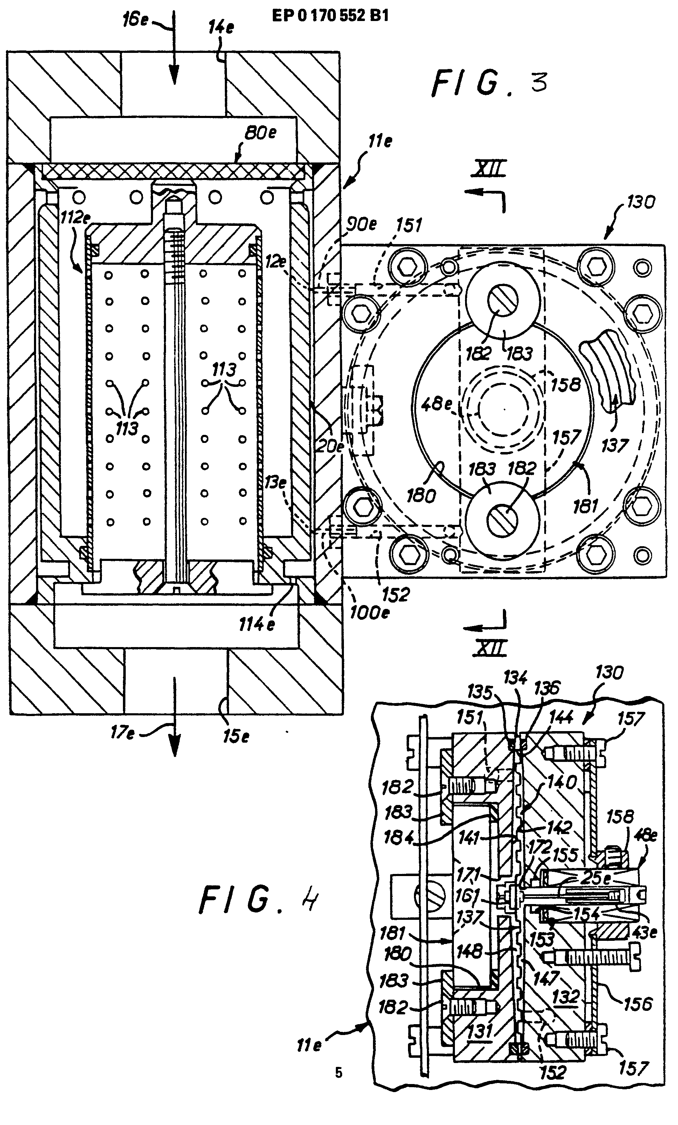

On va maintenant décrire à l'appui des figures 3 et 4 un autre mode de réalisation.

Sur ces figures, l'ensemble intégré dans le corps 11e-pièce cylindrique 110e-cylindre ajouré 112e-filtre de tranquillisation 80e est identique à celui décrit à l'appui de la figure 2.

On ne va donc décrire ci-après que les moyens adaptes à mesurer la différence de pression entre la zone amont de mesure 12e et la zone de mesure aval 13e, ces zones étant matérialisées par les perçages 90e et 100e mettant ces zones respectivement en communication avec les moyens adaptés à mesurer ces différences de pression.

Ces moyens, référencés de manière générale en 130, comportent deux pièces 131, 132, une entretoise annulaire 134 disposée entre ces deux pièces enserrée par des joints annulaires de même diamètre 135, 136 disposés dans des logements appropriés des pièces 131, 132.

Une enceinte de mesure 140 est ainsi ménagée dans le volume constitué par les parois internes 141, 142 des pièces 131, 132 et par la surface cylindrique intérieure 144 de l'entretoise 134.

Les moyens adaptés à mesurer les différences de pression entre les zones amont et aval comportent également une membrane circulaire 137, montée sur l'entretoise annulaire 134. La membrane 137 est métallique, de faible épaisseur (5/100 mm dans l'exemple de réalisation représenté sur les figures 3 et 4), ondulée avec des ondulations concentriques de section rectangulaire. Elle est montée sur l'entretoise 134 par son ondulation externe dans laquelle vient se loger ladite entretoise. Les deux pièces 131, 132, les joints 135, 136, l'entretoise 134 et la membrane 137 sont axialement serrés de manière appropriée, par les dispositifs non représentés sur ces figures, en sorte que les bords périphériques de l'enceinte de mesure 140 soient étanches.

On observera que la membrane 137 divise le volume intérieur de l'enceinte de mesure 140 en deux parties 147, 148, une première de celles-ci, dite "amont" étant raccordée au passage 90e par une conduite interne 151 que comporte la pièce 131, et la seconde, dite "aval" étant raccordée au passage 100e par une conduite 152 que comporte la pièce 132. Une pression égale à celle de la zone de mesure amont 12e est donc présente dans la partie amont 148 de l'enceinte de mesure 140, tandis qu'une pression égale à celle de la zone de mesure aval 13e est présente dans la partie aval 147 de l'enceinte de mesure 140.

Un noyau plongeur 43e dans une bobine 48e est rendu solidaire du centre de la membrane 137 au moyen d'un axe 25e. On observera que la pièce 132 présente à cet effet un alésage axial 152 et des échancrures annulaires 153, 154 propres au logement de la bobine 48e et d'un joint annulaire 155. Cet ensemble est maintenu dans la pièce 132 au moyen d'une plaque 156, de vis 157 ainsi que d'une pièce de maintien annulaire 158.

La pièce 131 présente également un alésage axial 171 permettant le passage des moyens 161 de fixation de l'axe 25e sur la membrane 137. On observera que l'enceinte de mesure 140 présente une section axiale particulièrement étroite, les faces internes 141, 142 des pièces 131, 132 ayant une forme sensiblement tronconique en sorte qu'elles convergent des alésages 171, 172 aux logements des joints 135, 136.

Cet agencement permet de donner pour fonction aux faces internes 141, 142 celle de moyen de butée pour la membrane en cas de surcharge momentanée.

La pièce 131 présente un logement axial circulaire 180 propre à l'encastrement d'un capteur de pression 181 de forme identique. Ce capteur de pression, qui est du type à jauges de contrainte, est monté dans le logement 180 au moyen de deux vis 182, deux rondelles de maintien 183 avec interposition d'un joint annulaire 184.

On observera que l'alésage 171 met en communication la partie amont 148 de l'enceinte de mesure 140 avec le logement 180, et par conséquent, avec le capteur de pression 181.

En fonctionnement, le fluide est admis par l'orifice 14e dans le débitmètre, les 100/101è étant dérivés à l'intérieur de la pièce cylindrique 110e, tandis que le 1/101è est admis dans la conduite de mesure 20e, comme déjà décrit à l'appui de la figure 2. La pression dans la zone de mesure 12e se trouve admise dans la partie amont 148 de l'enceinte de mesure 140, tandis que la pression dans la zone de mesure aval 13e se trouve admise dans la partie aval 147 de l'enceinte 140. La membrane 137 se déforme sous l'effet de la différence de pression existant de part et d'autre, cette déformation engendrant un déplacement du noyau 43e. Un signal électrique est généré par la bobine 48e donnant ainsi une mesure de la différence de pression.

La pression dans la zone de mesure amont 12e est directement mesurée au moyen du capteur de pression 181.

En cas de surcharge momentanée du débitmètre, la membrane 137 vient en appui contre les surfaces de butée 141 ou 142, les ondulations rectangulaires que comporte la membrane 137 permettant de plaquer cette dernière contre l'une ou l'autre des surfaces de butée, limitant ainsi encore mieux les risques de déformation de ladite membrane 137.

L'exemple de réalisation décrit à l'appui des figures 3 et 4 est particulièrement avantageux en ce qu'il intègre, dans un volume de faibles dimensions (ici 12 x 12 x 6 cm) un débitmètre pouvant mesurer des débits importants (plus de 100 m$^3$/h) comportant des moyens, particulièrement sensibles, de mesure de différence de pression entre les zones de mesure amont et aval, un capteur de pression pour la mesure de la pression absolue, amont sur ces figures, des moyens permettant de dériver, en régime turbulent, une fraction importante du débit de fluide admis dans le débitmètre et des moyens de protection desdits moyens adaptés à mesurer la différence de pression entre les zones amont et aval.

On notera aussi que dans certaines applications un dispositif autre que l'ensemble bobine 48-noyau plongeur 43 peut être utilisé pour mesurer le déplacement axial du plateau 99 de l'enceinte élastiquement extensible axialement 95, ou de la membrane 137.

Dans les modes de réalisation représentés aux figures 1, 2 et 3, un anneau de garde 92 est disposé en amont du conduit de mesure 20. Un tel anneau de garde peut très bien être disposé en amont d'un conduit de dérivation adapté à imposer à la fraction de fluide dérivé, un écoulement en régime laminaire.

On observera que le partage des débits entre les conduits de mesure et de dérivation se fait, dans ce cas, en aval de l'anneau de garde.

En outre, il a été décrit à l'appui des figures 1, 2 et 3, des modes de réalisation de débitmètres comportant un trajet de mesure et un trajet de dérivation, le trajet de dérivation étant intégré à l'intérieur du débitmètre. Il va de soi que le trajet de dérivation peut être ménagé à l'extérieur du débitmètre, ce dernier étant par exemple placé en dérivation de la canalisation principale dont on mesure le débit.

Dans un tel cas, il convient, bien entendu, de veiller à ce que le partage des débits reste constant, par exemple en s'arrangeant pour que l'écoulement dans la canalisation dont on mesure le débit soit laminaire entre les bornes de la dérivation sur laquelle est placé le débitmètre.

## Revendications

1. Dispositif de mesure d'un débit de fluide gazeux, du genre mettant en oeuvre un élément cylindrique creux (93, 93d) placé dans un corps de logement également cylindrique (11c, 11d, 11e) définissant entre eux un conduit annulaire (20c, 20d, 20e) de faible dimension radiale pour ledit fluide gazeux, qui s'écoule en régime laminaire et comprenant un moyen d'élaboration d'une grandeur de mesure de débit qui est proportionnelle au produit Pm x ΔP de ladite pression différentielle ΔP entre les extrémités amont et aval dudit conduit annulaire (20c, 20d, 20e), et de la pression absolue Pm prélevée au travers du corps de logement (11c, 11d, 11e), caractérisé en ce que l'élément cylindrique (93, 93d) définissant intérieurement le conduit annulaire (20c, 20d, 20e) est solidarisé à immobilisation complète dans son corps de logement (11c, 11d, 11e) et en ce que les moyens de mesure de pression notamment différentielle prélèvent le pression aux extrémités du conduit (20c, 20d, 20e) via des perçages amont (90, 90d, 90e) et aval (100, 100d, 100e) dans un des éléments définissant le conduit annulaire.

2. Dispositif de mesure de débit selon la revendication 1, caractérisé en ce que l'élément cylindrique (93d) est équipé à ses extrémités de moyens d'admission (118) et d'échappement (119) d'un débit gazeux débouchant en regard de perforations radiales (120) pour dériver un débit gazeux de mesure, tandis qu'un débit principal circule directement à l'intérieur dudit élément cylindrique creux.

3. Dispositif de mesure de débit selon la revendication 2 caractérisé en ce que l'élément (93d) incorpore un cylindre (112) avec des perforations (113) permettant le passage d'un débit supérieur mais proportionnel au débit de mesure.

4. Dispositif de mesure de débit selon la revendication 1, caractérisé en ce que les moyens de mesure de la pression différentielle sont du type à noyau magnétique (43c, 43d) et bobine (48c, 48d), le noyau étant solidaire d'un fond (99, 99d), d'un enceinte élastiquement axialement déformable (98, 95d), soumise extérieurement à la pression amont et intérieurement à la pression aval.

5. Dispositif de mesure selon la revendication 1, caractérisé en ce que les moyens de mesure de la pression différentielle sont du type à noyau (43e) et bobine (48e), le noyau (43e) étant solidaire du centre d'une membrane (137) immobilisée à sa périphérie et soumise sur une face à la pression amont, sur l'autre face à la pression aval.

6. Dispositif de mesure selon la revendication 1, caractérisé en ce que l'élément cylindrique (93, 93d) présente au moins à son extrémité amont un anneau de garde (92, 92d).

## Patentansprüche

1. Vorrichtung zum Messen eines Durchsatzes von gasförmigem Fluid unter Verwendung eines hohlen zylindrischen Elementes (93, 93d), welches in einem ebenfalls zylindrischen Aufnahmeteil (11c, 11d, 11e) angeordnet ist, die zwischen sich eine ringförmige Leitung (20c, 20d, 20e) kleinen Radialmaßes für dieses gasförmige Fluid begrenzen, welches im laminaren Strömungsbereich fließt, und ein Arbeitsmittel einer Größe des Durchsatzmaßes aufweist welches proportional ist dem Produkt Pm x ΔP des Differentialdruckes ΔP zwischen den Enden aufstromig und abstromig der ringförmigen Leitung (20c, 20d, 20e), und des absoluten Druckes Pm, der durch das Aufnahmeteil (11c, 11d, 11e) abgenommen wird, dadurch gekennzeichnet, daß das zylindrische Element (93, 93d), welches die ringförmige Leitung (20c, 20d, 20e) innen begrenzt, vollkommen unbeweglich in seinem Aufnahmeteil (11c, 11d, 11e) verbunden ist und daß die Mittel zum Messen insbesondere des Differentialdruckes den Druck an den Enden der Leitung (20c, 20d, 20e) über Bohrungen abnehmen aufstromig (90, 90d, 90e) und abstromig (100, 100d, 100e) in einem der die ringförmige Leitung begrenzenden Elemente.

2. Vorrichtung zum Messen des Durchsatzes nach Anspruch 1, dadurch gekennzeichnet, daß das zylindrische Element (93d) an seinen Enden mit Einlaßmitteln (118) und Auslaßmitteln (119) eines gasförmigen Durchsatzes ausgestattet ist, die gegenüber radialen Perforationen (120) münden, um einen gasförmigen Meßdurchsatz abzulenken, während ein Hauptdurchsatz direkt in das Innere dieses hohlen zylindrischen Elementes fließt.

3. Vorrichtung zum Messen des Durchsatzes nach Anspruch 2, dadurch gekennzeichnet, daß das Element (93d) einen Zylinder (112) mit Perforationen (113) einschließt, welche den Durchgang für einen höheren Durchsatz aber proportional zum Meßdurchsatz erlauben.

4. Vorrichtung zum Messen des Durchsatzes nach Anspruch 1, dadurch gekennzeichnet, daß die Meßmittel des Differentialdruckes einen magnetischen Kern (43c, 43d) und eine Spule (48c, 48d) aufweisen, wobei der Kern mit einem Boden (99, 99d) eines elastisch axial deformierbaren Raumes (98, 95d) der außen dem aufstromigen Druck und innen dem abstromigen Druck unterworfen ist, verbunden ist.

5. Vorrichtung zum Messen nach Anspruch 1, dadurch gekennzeichnet, daß die Meßmittel für den Differentialdruck einen Kern (43e) und eine Spule (48e) aufweisen, wobei der Kern (43e) mit dem Zentrum einer Membran (137) verbunden ist, die an ihrem Umfang unbeweglich ist und auf einer Fläche dem aufstromigen Druck, auf der anderen Fläche dem abstromigen Druck unterworfen ist.

6. Vorrichtung zum Messen nach Anspruch 1, dadurch gekennzeichnet, daß das zylindrische Element (93, 93d) mindestens an seinem aufstromigen Ende einen Schutzring (92, 92d) aufweist.

## Claims

1. Device for measuring a gaseous fluid flow, of the type using a hollow cylindrical element (93, 93d) placed in a housing body (11c, 11d, 11e) which is also cylindrical, defining between them an annular channel (20c, 20d, 20e) of small radial dimension for the said gaseous fluid which flows in a laminar pattern, and comprising means for working out a flow rate measurement value which is proportional to the product Pm x ΔP of the said pressure differential ΔP between the upstream and downstream ends of the annular channel (20c, 20d, 20e) and the absolute pressure Pm sampled across the housing body (11c, 11d, 11e), characterized in that the cylindrical element (93, 93d) defining the inside of the annular channel (20c, 20d, 20e) is fixed and completely immobilised in its housing body (11c, 11d, 11e) and in that the means for measuring pressure, in particular differential pressure, samples the pressure at the ends of the channel (20c, 20d, 20e) through upstream (90, 90d, 90e) and downstream (100, 100d, 100e) perforations in one of the elements defining the annular channel.

2. Flow rate measuring device according to Claim 1, characterized in that the cylindrical element (93d) is equipped at its ends with means for admission (118) and escape (119) of a gaseous flow emerging opposite radial perforations (120) to divert a gaseous measuring flow, while a main flow passes directly to the inside of the said hollow cylindrical element.

3. Flow rate measuring device according to Claim 2, characterized in that the element 93d incorporates a cylinder (112) with perforations (113) allowing the passage of a flow rate greater than but proportional to the measuring flow rate.

4. Flow rate measuring device according to Claim 1, characterized in that the means for measuring the differential pressure is of the type having a magnetic core (43c, 43d) and a coil (48c, 48d), the core being integral with one end (99, 99d) of an elastically axially deformable enclosure (98, 95d) subjected on the outside to the upstream pressure and on the inside to the downstream pressure.

5. Measuring device according to Claim 1, characterized in that the means for measuring the differential pressure is of the type having a core (43e) and a coil (48e), the core being integral with the centre of a membrane (137) immobilised at its periphery and subjected on one side to the upstream pressure and on the other side to the downstream pressure.

6. Measuring device according to Claim 1, characterized in that the cylindrical element (93, 93d) has a guard ring (92, 92d) at least at its upstream end.

EP 0 170 552 B1

# FIG. 1

# FIG. 2

EP 0 170 552 B1

FIG. 3

FIG. 4